# EUROPEAN PATENT APPLICATION

(11) **EP 2 677 408 A1**
(43) Date of publication of application: **25.12.2013**
(21) Application number: 11858882.1
(22) Date of filing: 29.11.2011
(51) Int. Cl.: G06F 3/048

(54) **ELECTRONIC DEVICE, DISPLAY METHOD, AND PROGRAM**

(30) Priority: 17.02.2011 JP 2011031530
(71) Applicant: NEC CASIO Mobile Communications, Ltd., Kawasaki-shi Kanagawa 211-8666 (JP)
(72) Inventor: OGURA, Yuta, Kawasaki-shi, Kanagawa 211-8666 (JP)
(74) Representative: Vossius & Partner
(86) International application number: PCT/JP2011/006629
(87) International publication number: WO 2012/111057

(57) **Abstract**

In the present invention, the object is to cause the user to easily understand entire image of operation menus having a hierarchical structure and to improve a searchability to search a desired operation menu and an operability, in order to solve the problem, an electronic device is provided, that displays on a display, tree-shaped menus in which a plurality of operation menus having a hierarchical structure, and indicating operation content respectively, are disposed in a tree shape, and is capable of enlargement and reduction of the tree-shaped menus.

## Description

### TECHNICAL FIELD

The present invention relates to an electronic device, a display method and a program.

### BACKGROUND ART

In general, a multifunctional electronic device such as, for example, a mobile phone or a Personal Computer (PC) has hierarchically structured operation menus, and receives an instruction to perform a predetermined process from a user, using the operation menus. The user's operations with respect to the electronic device are commonly performed as follows.

First, the user performs an input operation to display operation menus with respect to the electronic device. Then, the electronic device displays a list of operation menus in a first hierarchy. The user performs an input operation to select one operation menu among the displayed operation menus. Then, the electronic device displays a list of the operation menus in a second hierarchy that is positioned immediately below the selected operation menu. Then, the user performs an input operation to select one operation menu among the displayed operation menus. Then, the electronic device displays a list of the operation menus in a third hierarchy that is positioned immediately below the selected operation menu. The user repeats such processes a predetermined number of times to reach a desired operation menu.

In this manner, in a case of the electronic device in the related art, if the desired operation menu is present in a deep hierarchy, the user has to repeat the above operations many times, thus it is labor intensive. Further, in a process of navigating between hierarchies, screen transition and effect are performed many times, so that there is a concern that it takes time to reach the desired operation menu and the user might forget the current position in the hierarchies. Further, as the number of the operation menus is increased and the depth of the hierarchy becomes deep, it becomes difficult for the user to understand an entire image of operation menus, as a result, there is a concern that it is impossible to recognize where the desired operation menu is present in the hierarchies.

Here, Patent Document 1 (Japanese Unexamined Patent Publication No. 2004-265244) discloses a display menu providing device of displaying a menu having a hierarchical structure which displays indexes of a first hierarchy and indexes of an intermediate hierarchy and a last hierarchy that are positioned below the selected index of the first hierarchy, as an object (hereinafter, "index object") that can be selected and instructed by an input device. As a display format, the index objects of the first hierarchy are arranged side by side in a row, and the index objects of the intermediate hierarchy, that are positioned below the index that is selected among the indexes of the first hierarchy, are displayed on the remaining region. Further, there is disclosed means of displaying small frames associated with each of the index objects of the intermediate hierarchy, and arranging the index objects of the last hierarchy positioned further below side by side in a row in each small frame.

Patent Document 2 (Japanese Unexamined Patent Publication No. 2003-140797) discloses a display control device which displays menus having a hierarchical structure, divides a screen into a plurality of areas with the position of a currently selected hierarchy level as a reference, reads menu information of the hierarchy level of the number corresponding to the screen division number and displays the menu in each area. As a display format, there is disclosed means for dividing the screen into a plurality of areas that are arranged in the horizontal direction, listing and displaying menus of a first hierarchy side by side in a row in a first area, listing and displaying menus of a second hierarchy that are positioned below the selected menu among the menus of the first hierarchy side by side in a row in a second area positioned right next the first area, and listing and displaying third menus that are positioned below the selected menu among the menus of the second hierarchy side by side in a row in a third area positioned in the vicinity on the right side of the second area.

Patent Document 3(Japanese Unexamined Patent Publication No. 2009-15455) discloses an information display device which displays master information having hierarchically structured item elements, and displays each item element through a connection line extending radially from the master information as the center and indicating each association. Further, there is disclosed means for displaying an item element positioned below the displayed item element in the same manner, if an input to select the displayed item element is received.

Patent Document 4 (Japanese Unexamined Patent Publication No. 2003-58358) discloses a layout device in which a user can customize operation menus. In the layout device, a canvas size determination functional block determines the size of a canvas in which a plurality of content display boxes should be arranged, based on a user input, and a menu arrangement functional block presents a plurality of menu icons on the screen of a PC and arranges menu icons that are selected by the user at the position that is selected by the user in the canvas. Then, the box size determination functional block sets a region including a position at which the menu icons are arranged, and determines the size of the content display box for each menu based on the cursor operation by the user, and the content determination functional block searches a content database and determines a content to be fitted into the box based on the size of the determined content display box.

### RELATED DOCUMENT

### PATENT DOCUMENT

[Patent Document 1] Japanese Unexamined Patent Publication No. 2004-265244
[Patent Document 2] Japanese Unexamined Patent Publication No. 2003-140797
[Patent Document 3] Japanese Unexamined Patent Publication No. 2009-15455
[Patent Document 4] Japanese Unexamined Patent Publication No. 2003-58358

### DISCLOSURE OF THE INVENTION

In a case of listing and displaying operation menus for each hierarchy side by side in a row as the display formats described in Patent Documents 1 and 2, it is difficult for the user to intuitively understand the hierarchical structure. Further, in a case of the display formats described in Patent Documents 1 and 2, with respect to the lower hierarchies among a plurality of hierarchies displayed on the display, only operation menus positioned below the selected operation menu in the upper hierarchy are displayed. That is, the display formats described in Patent Documents 1 and 2 cannot display all operation menus. For this reason, it is difficult for the user to understand the entire image of the hierarchical structure.

Further, in a case of the display format described in Patent Document 1, there is a problem that the menus of only three hierarchies can be displayed at the same time. For this reason, in a case where there are a lot of hierarchies, menus of only a portion of hierarchies can be displayed.

In a case of the display format described in Patent Documents 1 and 2, it is impossible to sufficiently enhance the ease of search (searchability) and the ease of operation (operability) in a user operation of searching the desired operation menu among the operation menus having a hierarchical structure.

A technologies described, in Patent Document 3 are not configured to display the operation menu indicating the operation content. In addition, the technology described in Patent Document 4 is not configured to display the hierarchically structured operation menus.

The technologies described in Patent Documents 3 and 4 cannot improve a searchability and an operability in a user operation of searching the desired operation menu among the operation menus having a hierarchical structure.

Therefore, the object of the present invention is to cause the user to easily understand an entire image of operation menus having a hierarchical structure and to improve searchability of searching a desired operation menu and operability.

According to the present invention, there is provided an electronic device including a menu display unit that can display, on a display, tree-shaped menus in which a plurality of operation menus having a hierarchical structure, and indicating operation content respectively, are disposed in a tree shape, and is capable of enlargement and reduction of the tree-shaped menus.

Further, according to the present invention, there is provided a display method which is implemented by an electronic device including displaying, on a display, tree-shaped menus in which a plurality of operation menus having a hierarchical structure, and indicating operation content respectively, are disposed in a tree shape, and being capable of enlargement and reduction of the tree-shaped menus.

In addition, according to the present invention, there is provided a program for performing a menu display on a display of an electronic device, the program causes a computer to function as a menu display unit that displays, on the display, tree-shaped menus in which a plurality of operation menus having a hierarchical structure, and indicating operation content respectively, are disposed in a tree shape, and is capable of enlargement and reduction of the tree-shaped menus.

According to the present invention, it is possible for a user to easily understand entire image of operation menus having a hierarchical structure and possible to improve a searchability to search a desired operation menu and operability.

### BRIEF DESCRIPTION OF THE DRAWINGS

These and other objects, features, and advantages of the invention will be apparent through reference to the description of preferred embodiments and accompanying drawings.
Fig. 1 is a diagram illustrating an example of a display process of a menu display unit 10 of the embodiment.
Fig. 2 is an example of a functional block diagram of an electronic device of the embodiment.
Fig. 3 is a diagram illustrating an example of the display process of the menu display unit 10 of the embodiment.
Fig. 4 is a diagram illustrating an example of the display process of the menu display unit 10 of the embodiment.
Fig. 5 is a diagram illustrating an example of the display process of the menu display unit 10 of the embodiment.
Fig. 6 is a diagram illustrating an example of the display process of the menu display unit 10 of the embodiment.
Fig. 7 is a diagram illustrating an example of the display process of the menu display unit 10 of the embodiment.
Fig. 8 is a diagram illustrating an operation example of the electronic device of the embodiment.
Fig. 9 is an example of a functional block diagram of an electronic device of the embodiment.
Fig. 10 is a diagram illustrating an example of the display process of the menu display unit 10 of the embodiment.
Fig. 11 is a diagram illustrating an example of the display process of the menu display unit 10 of the embodiment.
Fig. 12 is a diagram illustrating an example of the display process of the menu display unit 10 of the embodiment.

### DESCRIPTION OF EMBODIMENTS

Hereinafter, embodiments of the present invention will be described referring to drawings.

In addition, each unit of the embodiments is realized by any combination of software and hardware, that is, mainly a CPU of a computer, a memory, a program loaded on the memory (including programs downloaded from storage media such as CDs or from servers on internet in addition to programs stored in advance in a memory from the stage of shipping a device), a memory unit such as a hard disc for storing the program, and an interface for internet connection. Then, it is obvious to those skilled in this field that various modification examples are available in realizing methods and devices.

Further, the functional block diagrams used in a description of the embodiment do not illustrate a configuration in hardware unit, but illustrate a block in function unit. In the figures, it is illustrated that each device of the embodiments is realized as one device, but realizing means is not limited thereto. That is, a physically divided configuration and logically divided configuration may be employed.

### First embodiment

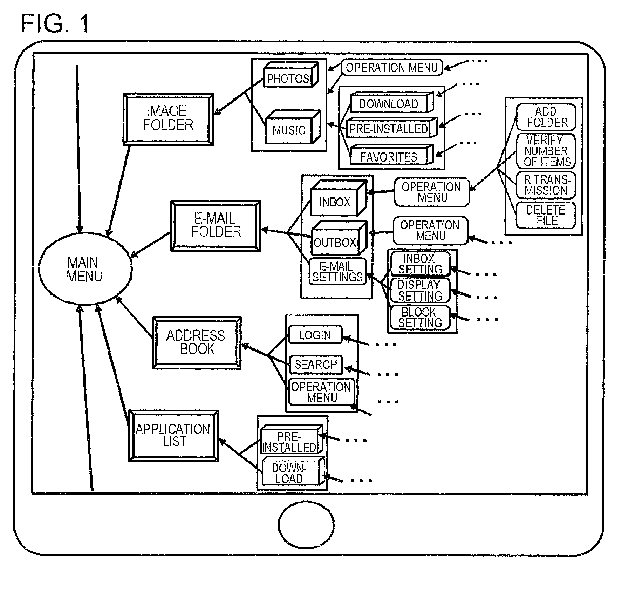

First, an overview of the embodiment will be described. An electronic device of the embodiment displays on a display, for example, as shown in Fig. 1, tree-shaped menus in which a plurality of operation menus having a hierarchical structure are arranged in a tree shape. The electronic device of the embodiment enlarges and/or reduces (hereinafter, collectively referred to as "enlargement and reduction") the tree-shaped menus, thereby displaying on the display, all of the tree-shaped menus or a specific portion in the tree-shaped menus in detail.

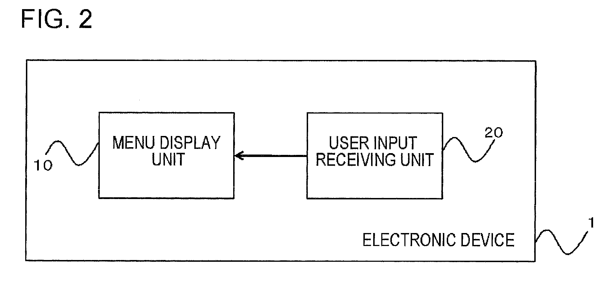

Next, the embodiment will be described in detail. Fig. 2 illustrates a block diagram illustrating an example of a configuration of an electronic device of the embodiment. As shown in the figure, the electronic device 1 of the embodiment includes a menu display unit 10 and a user input receiving unit 20. Hereinafter, each unit will be described.

The menu display unit 10 displays on a display, tree-shaped menus in which a plurality of operation menus having a hierarchical structure are arranged in a tree shape. Then, the menu display unit 10 is capable of enlargement and reduction of such tree-shaped menus.

The content of the operation menus may not be specially limited, but each of the operation menus is made to represent the operation content. The operation content represents the process content that the electronic device performs when selecting the operation menu.

The menu display unit 10 displays, for example, the tree-shaped menus shown in Fig. 1.

In the tree-shaped menus shown in Fig. 1, "main menu" is an operation menu in an uppermost hierarchy, and operation menus such as "image folder", "e-mail folder", "address book", and "application list" are present in a hierarchy that is one-level lower than the uppermost hierarchy, and further a plurality of operation menus are present in each lower hierarchy thereof. In the tree-shaped menus, second operation menus (example: image folder, and the like) positioned in a hierarchy immediately below the first operation menu (example: main menu) are arranged radially extending in the vicinity of the first operation menu, and the first operation menu and the second operation menus are connected by lines (in the figure, arrows) to be displayed. In addition, in Fig. 1, operation menus in the lower hierarchy are arranged only in the right side of the operation menu of the upper hierarchy, but in addition thereto, operation menus in the lower hierarchy may be arranged in the left side of the operation menu in the upper hierarchy. Such arrangement enables to ensure a sufficient arrangement space of the operation menus of the lower hierarchy, so that all of the plurality of operation menus can be arranged in the tree shape. Further, the user can intuitively understand the hierarchical structure of the plurality of operation menus.

The operation menus that the menu display unit 10 displays are made as objects, and if an input to select one operation menu from the user is received, the electronic device 1 performs a process associated with the selected operation menu.

Further, the menu display unit 10 is capable of enlargement and reduction of the tree-shaped menus displayed on the display or changing the portion displayed on the display. For example, the menu display unit 10 performs such display process in response to the instruction input that the user input receiving unit 20 receives from the user.

The unit that the user input receiving unit 20 receives the instruction input from the user may have various forms, for example, may be the following unit in a case where the electronic device 1 of the embodiment is configured to be able to perform a touch operation.

The touch operation is an operation that can be detected in a general touch panel, and the user input receiving unit 20 can detect touch operations, for example, as followings:
· touch: an operation of contacting a touch panel with a finger
· release: an operation of releasing the finger from the touch panel
· tap: an operation in which the touch and the release are combined
· press: an operation of continuously touching
· pinch in / pinch out: an operation of closing (in) / opening (out) a gap between two fingers contacting the touch panel
· slide: an operation of moving the position of the finger on the touch panel while touching the touch panel with the finger
· drag: after touching an icon or an arrow, an operation of sliding

Hereinafter, a display process that the menu display unit 10 can realize and an example of a user operation of executing the display process will be described.

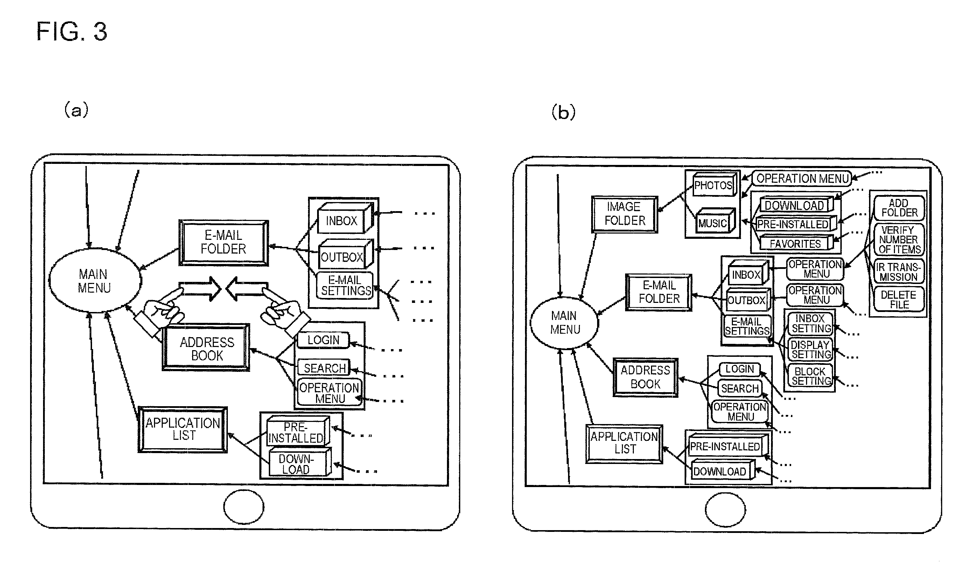

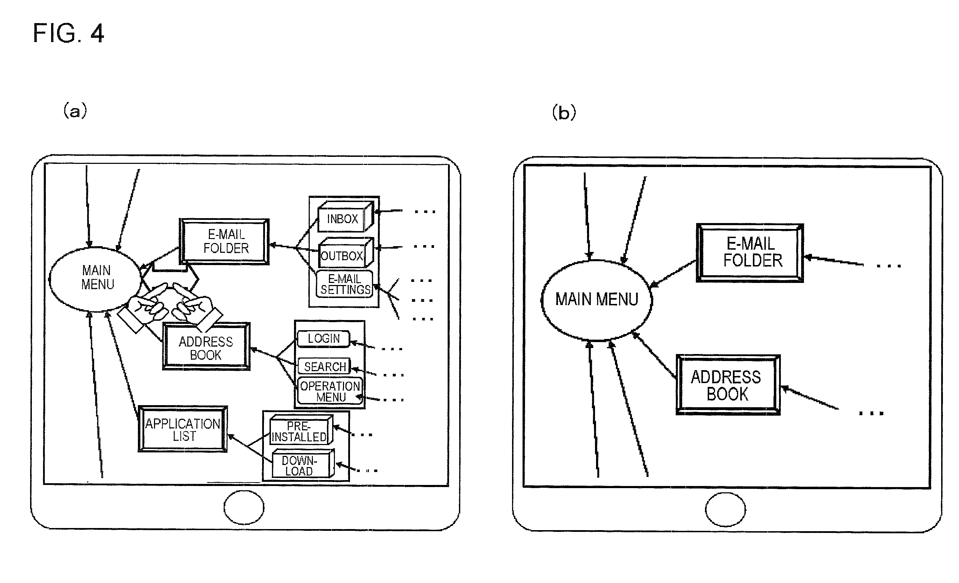

First, the aforementioned menu display unit 10 is capable of enlargement and reduction of the tree-shaped menus. For example, if the user input receiving unit 20 receives the touch operation of the pinch in, shown in Fig. 3 (a), the menu display unit 10, as shown in Fig. 3(b), may reduce and display the tree-shaped menus. Then, if the user input receiving unit 20 receives the touch operation of the pinch out shown in Fig. 4 (a), the menu display unit 10 may enlarge and display the tree-shaped menus as shown in Fig. 4(b). In addition, in response to the enlargement and reduction, the size of each operation menu on the display may also change. Therefore, in response to the change in the size, the menu display unit 10 may change the size of characters of the operation menu or may change information amount (number of characters, or the like) of each operation menu. For example, in a case of enlarging and displaying the operation menu, the size of the operation menu on the display is enlarged, thus the size of characters may be so large that the visibility is improved, or information amount may be so large that the user may more easily understand the content of the operation menu.

Such display process causes the entire tree-shaped menus to be reduced and displayed on the display, so that the user can understand entire image of the tree-shaped menus. Further, the specific portion in the tree-shaped menus can be enlarged and displayed, thus an effect of improving the visibility can be realized.

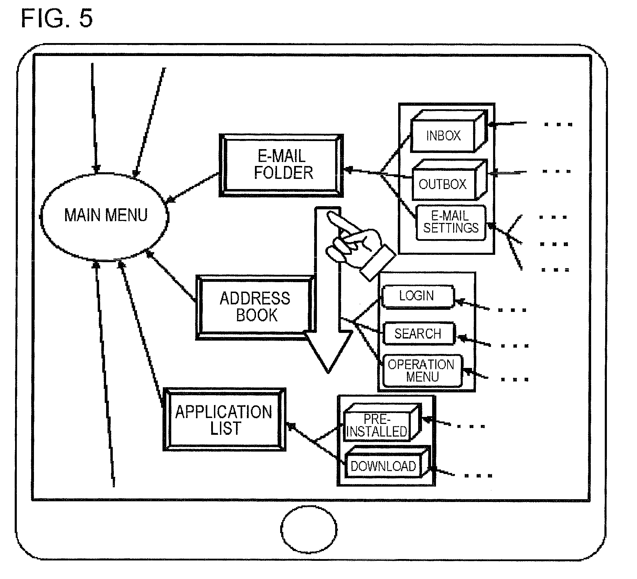

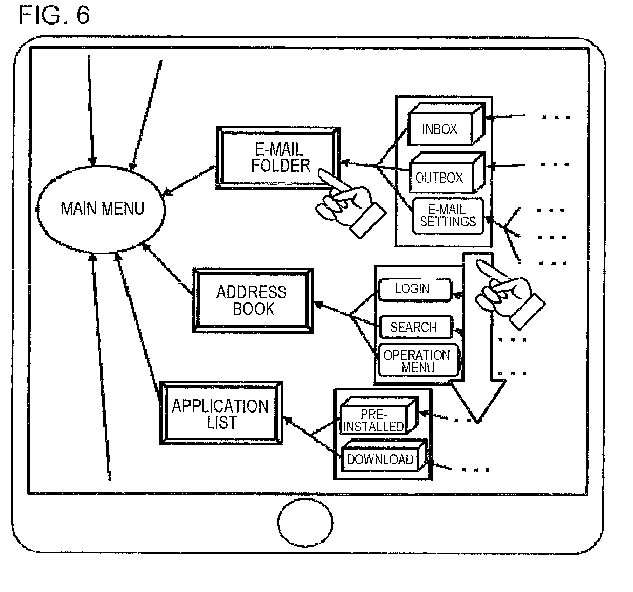

As another display process, the menu display unit 10 may rotate the tree-shaped menus displayed on the display. For example, if the user input receiving unit 20 receives the touch operation of the slide shown in Fig. 5, the menu display unit 10 may rotate the tree-shaped menus by a predetermined amount with the main menu in the uppermost hierarchy as a rotation center. Alternatively, as shown in Fig. 6, if the user input receiving unit 20 receives a touch operation of sliding with another finger while pressing a predetermined position on the touch panel with one finger, the menu display unit 10 may rotate the tree-shaped menus by a predetermined amount with the pressed position as the rotation center.

According to the display process, the user may change a portion to be displayed on the display, under a state where a portion in the tree-shaped menus is displayed on the display. Particularly, according to the display process described using Fig. 6, the user presses a desired operation menu (example: "e-mail folder" displayed in Fig. 6), thereby changing other operation menus to be displayed on the display while ensuring the state where the operation menu is displayed on the display.

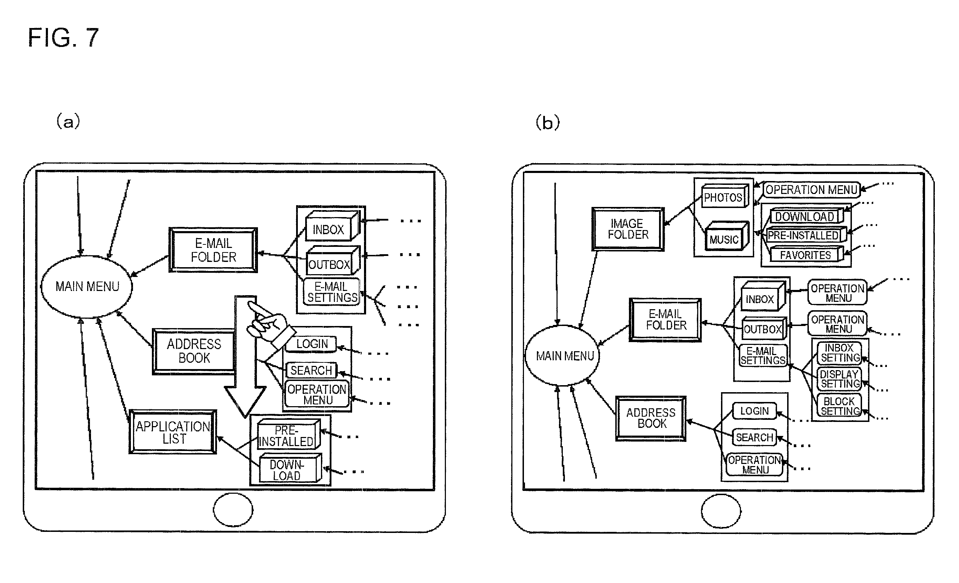

As another display process, the menu display unit 10 may slide and display the tree-shaped menus that are displayed on the display. For example, if the user input receiving unit 20 receives the touch operation of the slide shown in Fig. 7(a), the menu display unit 10 may slide on the entire tree-shaped menus by a predetermined amount, as shown in Fig. 7(b), while keeping the type of the tree-shaped menus.

According to the display process, the user may change a portion to be displayed on the display, under a state where a portion in the tree-shaped menus is displayed on the display.

As another display process, in a case where a plurality of second operation menus are present immediately below the first operation menu in the hierarchical structure of the operation menu, the menu display unit 10 may display each of the second operation menus in the tree-shaped menus so as to be visually identified, and may display the third operation menus so as to be visually identified, positioned below each of the second operation menus in the hierarchical structure of the operation menus, in the same manner as each of the second operation menus positioned in the upper level. Means for displaying the operation menu so as to be visually identified is not specially limited, but for example, the means may be realized by changing colors, shadings of characters, formats of characters, shapes of graphics surrounding operation menus.

In addition, the first operation menu may be, for example, the operation menu of the uppermost hierarchy. For example, in a case of the tree-shaped menus shown in Fig. 1, the menu display unit 10 displays a plurality of second operation menus "image folder", "e-mail folder" and the like that are positioned immediately below the operation menu "main menu" in the uppermost hierarchy so as to be visually identified. For example, the background color of each of the second operation menus may be different. Then, the menu display unit 10 displays a plurality of third operation menus "photo", "music", "download", "inbox", and the like positioned below the second operation menus "image folder", "e-mail folder", and the like so as to be identified, in the same manner as the second operation menu positioned in the upper level. For example, the background color of each of the third operation menus may be the same as the background color of the second operation menus positioned in the upper level.

Besides, the first operation menu may be the operation menu that the user designates. For example, in the tree-shaped menus shown in Fig. 1, if the user input receiving unit 20 receives an input (example: tapings twice, pressing for a predetermined period, or the like) to designate an operation menu "e-mail folder", the menu display unit 10 sets the operation menu "e-mail folder" as the first operation menu, and displays each of a plurality of second operation menus "inbox", "outbox", and "e-mail setting" positioned immediately below the first operation menu so as to be visually identified. Then, the menu display unit 10 displays a plurality of third operation menus "operation menu", "reception setting", "display setting", and the like positioned below each of the second operation menus "inbox", "outbox", and "e-mail setting" so as to be identified in the same manner as the second operation menus positioned in the upper level.

According to the display process, the user can intuitively categorize and identify a plurality of operation menus positioned immediately below a predetermined operation menu.

In addition, the reception of the input by the aforementioned touch operation is only an example, and the user input receiving unit 20 of the embodiment can receive the input of the same content as the above from the user, by using various units in the related art.

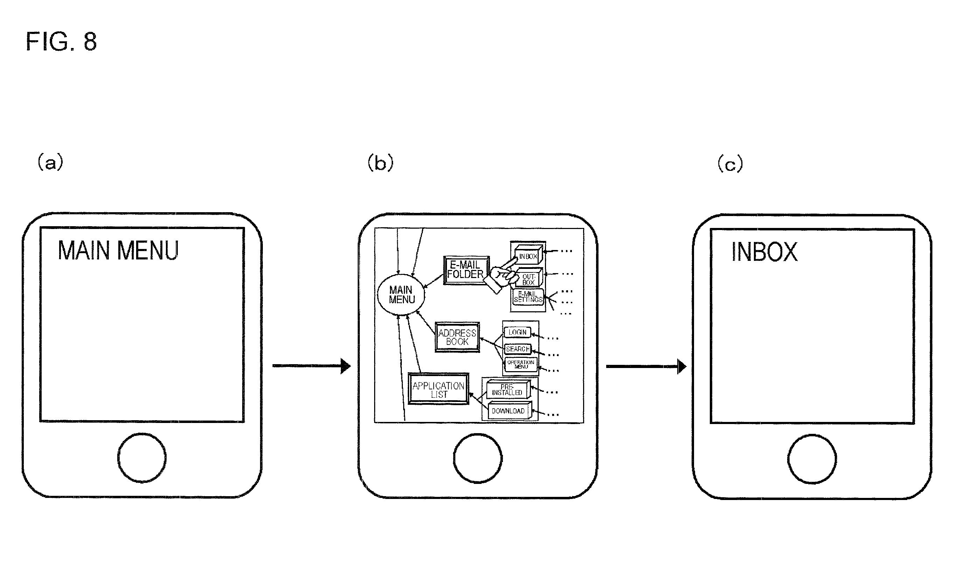

Next, an operation example of the electronic device 1 of the embodiment will be described using Fig. 8. In addition, the user is supposed to perform an operation under the below conditions.
· Currently, as shown in Fig. 8 (a), the main menu screen is displayed on the display. The main menu screen is a screen on which a plurality of operation menus positioned in the hierarchy immediately below the main menu are listed and displayed (simply shown in the figure).
· The user wishes to display the inbox screen so as to confirm the e-mail from now.
· The start-up of an e-mailer can be performed from the operation menu of the tree-shaped menus
· The display of the inbox screen can be performed from the operation menu "inbox."

First, if the user performs a predetermined operation, the menu display unit 10 switches the display on the display from the main menu displayed in Fig. 8 (a) to the tree-shaped menus shown in Fig. 8(b).

Next, the user enlarges and/or reduces the tree-shaped menus by the touch operation, or switches the display content on the display by rotating and sliding the tree-shaped menus to be displayed, and searches the operation menu "inbox." Then, the user performs a predetermined touch operation (example: tap) of selecting the searched operation menu "inbox." Then, the electronic device 1 starts up the e-mailer, and as shown in Fig. 8(c), displays the inbox screen on the display.

According to the embodiment, it is possible to reduce the user's operation sequences until the desired operation menu is searched and performed, thereby improving convenience.

Further, according to the embodiment, the number of switching the screens is reduced, so that it is possible to reduce the process time of the application and to reduce the waiting time of the user.

Furthermore, according to the embodiment, the user can cause entire tree-shaped menus to be displayed on the display and graphically overview the hierarchical structure, thereby quickly finding the desired operation menu.

Further, according to the embodiment, it is possible to reduce the screen switching process accompanied by inter-hierarchy movements that has been needed in the related art in the process of searching the desired operation menu, so that the user can quickly find the desired operation menu. In addition, if the number of the operation menu is increased and the hierarchical structure becomes deep, in the process of searching the desired operation menu, the user returns to the original hierarchy by wrong operation or return to the upper hierarchy in order to confirm the current position. In this case, according to the related art, the number of the screen switching processes accompanied by the inter-hierarchy movement is remarkably increased. Therefore, as the number of the operation menu is increased and the hierarchical structure becomes deep, the effect becomes remarkable.

Further, according to the tree-shaped menus of the embodiment, it is possible to draw the operation menu independent from the aspect ratio of the display. The reason is that the tree-shaped menus do not have a specific layout. The application of a device such as a mobile phone that is supposed to be moved has a function to fit vertically or horizontally and update the screen due to changes in surrounding. However, it is common that the display has a rectangular shape, and needs a dedicated layout vertically or horizontally. However, in a case of tree-shaped menus of the embodiment, only the change in a display range does not give any effect to the operability of functions, thereby being compatible to any aspect ratio.

In addition, the electronic device 1 of the embodiment may be applied to an apparatus such as a PC or a consumer electronics in addition to a portable terminal such as a mobile phone and a smart phone, but especially, in a case of being applied to the electronic device 1 of which display is relatively small and display amount of information has a limit, such as a portable terminal, the effect becomes remarkable. In addition, even in an electronic device such as a PC of which display is relatively large, the display region of the tree-shaped menus on the display is limited, and thus the similar remarkable effect can be achieved even in a case where a sufficient size is not ensured.

According to the embodiment, it is possible for the user to easily understand the entire image of operation menus having a hierarchical structure and to improve a searchability to search a desired operation menu and operability.

In addition, the electronic device 1 of the embodiment can be realized by installing, for example, the following program in a computer:
A program which performs a menu display on a display of the electronic device and causes a computer to function as a menu display unit which displays, on the display, tree-shaped menus in which a plurality of operation menus having a hierarchical structure, and indicating operation content respectively, are disposed in a tree shape, and is capable of enlargement and reduction of the tree-shaped menus.

### Second embodiment

The electronic device 1 of the embodiment has a configuration capable of creating a user dedicated original menu from the tree-shaped menus displayed on the display in addition to the configuration of the electronic device 1 of the first embodiment. The original menu is a menu to extract a predetermined operation menu, for example, an operation menu that is frequently used by the user, among a plurality of operation menus having a hierarchical structure.

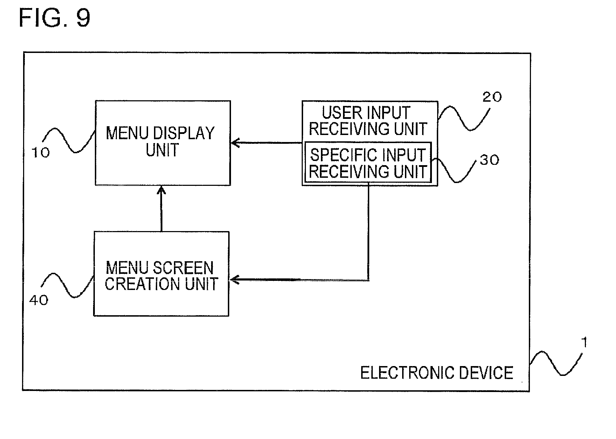

Fig. 9 illustrates a block diagram illustrating an example of a configuration of an electronic device of the embodiment. As shown in the figure, the electronic device 1 of the embodiment includes a menu display unit 10, a user input receiving unit 20, and a menu screen creation unit 40, and the user input receiving unit 20 has a specific input receiving unit 30. Hereinafter, each portion will be described. In addition, the same description as the first embodiment will not be repeated.

The menu display unit 10 displays on the display, a first region in which the tree-shaped menus are displayed and a second region that is different from the first region. The menu display unit 10 displays on the second region, an original menu described later that the menu screen creation unit 40 creates.

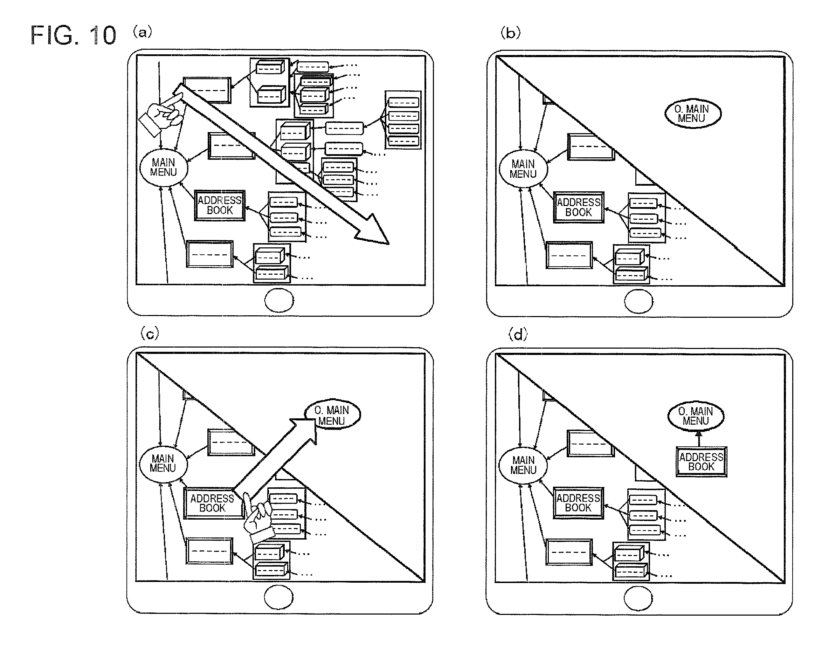

For example, as shown in Fig. 10(a), in a state where the tree-shaped menus is displayed, if the user input receiving unit 20 receives the touch operation of the sliding to divide the display into two (in the case of the figure, sliding from upper left to lower right in the display), the menu display unit 10, as shown in Fig. 10 (b), may divide the display into a first region on which the tree-shaped menus is displayed and a second region that is different from the first region. In addition, the user operation of dividing the display into the first region and the second region is not particularly limited, but the above example is only an example. Further, the form of dividing the display into two is not limited to the illustrated example, but for example, the display may be horizontally or vertically divided into two. Furthermore, the size of the first region and the size of the second region may be different. In addition, another region that is different from the first region and the second region may be displayed on the display.

In addition, "O. main menu" that is the operation menu in the uppermost hierarchy of the original menu is displayed in the second region of Fig. 10(b).

The specific input receiving unit 30 receives from the user, an input to specify at least one of the operation menus in the tree-shaped menus (Hereinafter, "first tree-shaped menus") displayed on the first region. The input may be, for example, as shown in Fig. 10(c), a touch operation (drag) of touching a predetermined operation menu and sliding to the second region. Otherwise, the input may be a touch operation of touching a predetermined operation menu and tapping or pressing.

The menu screen creation unit 40 creates an original menu with the operation menu specified by an input that the specific input receiving unit 30 receives. Then, the menu screen creation unit 40 controls the menu display unit 10 and causes the created original menu to be displayed on the second region.

For example, the menu screen creation unit 40 may create the tree-shaped menus with a specified operation menu. Specifically, the menu screen creation unit 40, as shown in Fig. 10(d), may create tree-shaped menus (hereinafter, "second tree-shaped menus") in which the specified operation menu is arranged in the lower hierarchy of "O. main menu." In addition, if another operation menu is specified in the state shown in Fig. 10(d), the menu screen creation unit 40 may create tree-shaped menus by adding the specified operation menu to the second tree-shaped menus shown in Fig. 10(d).

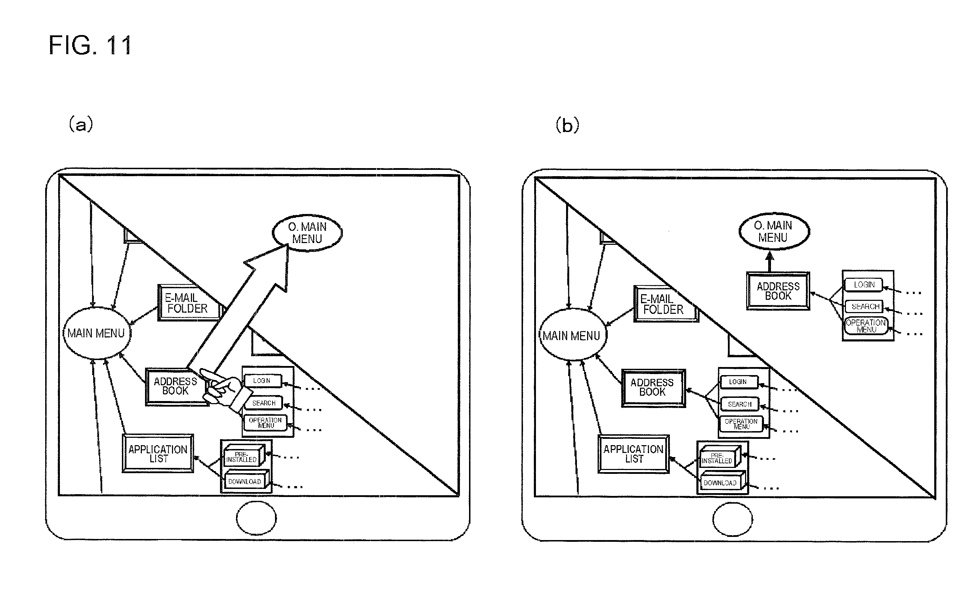

Besides, if one operation menu is specified by the touch operation shown in Fig. 11(a) as shown in Fig. 11(b), the menu screen creation unit 40 may create the specified operation menu and the operation menus positioned in the lower hierarchy in the first tree-shaped menus as a second tree-shaped menus arranged in the lower hierarchy of "O. main menu." For example, "operation menus positioned in the lower hierarchy" may be operation menus positioned immediately below the specified operation menu, or may be the entire operation menus positioned below the specified operation menu, or may be operation menus included in the hierarchies from the hierarchy immediately below the specified operation menu to the hierarchy a predetermined number of hierarchies below the specified operation menu. In addition, under the state shown in Fig. 11(b), if another operation menu is specified, the menu screen creation unit 40 may create tree-shaped menus in which the specified operation menu and the operation menu of that hierarchy are added to the second tree-shaped menus shown in Fig. 11 (b) .

The second tree-shaped menus displayed on the second region may have the same configuration as the first tree-shaped menus displayed on the first region. That is, a display process such as the enlargement and reduction described in the first embodiment can be performed on both the first tree-shaped menus and the second tree-shaped menus, and the operation menus are made as objects, if an input to select one operation menu is input from the user, the electronic device 1 may perform the process associated with the selected operation menu.

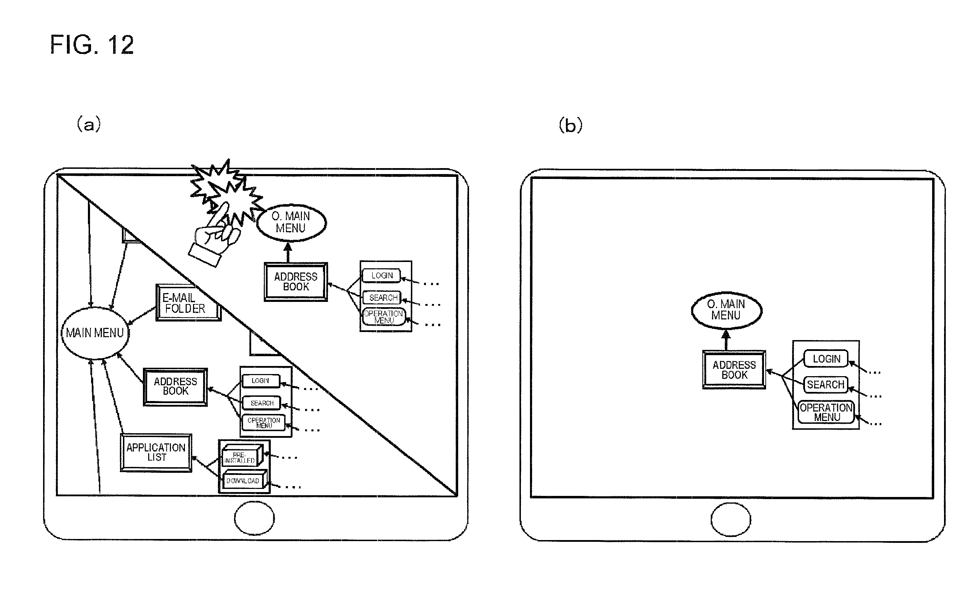

In addition, if the user input receiving unit 20 receives from the user, a predetermined operation, for example, the touch operation, as shown in Fig. 12(a), of twice tapping on the second region, the menu display unit 10 may display the second region on the entire screen as shown in Fig. 12 (b) .

The configuration of the original menu that is created in this manner is stored to a non-volatile storage device and then is displayed on the display in response to the call operation from the user.

Next, an example of the operation of the electronic device 1 of the embodiment will be described.

First, in the state where the menu display unit 10 displays the first tree-shaped menus as shown in Fig. 1, the user input receiving unit 20 receives a user input to display the second region, for example, the touch operation of sliding from upper left to lower right in the display, shown in Fig. 10 (a) . Then, the menu display unit 10, as shown Fig. 10(b), divides the display into a first region in which a first tree-shaped menus is displayed and a second region different from the first region. At this time, "O. main menu" that is the operation menu of the uppermost hierarchy of the original menu is displayed on the second region.

Next, the specific input receiving unit 30 receives an input to specify at least one of the operation menus in the first tree-shaped menus. For example, the specific input receiving unit 30 receives a touch operation (drag) of touching a predetermined operation menu shown in Fig. 10 (c) and of sliding to the second region.

Then, the menu screen creation unit 40 creates the original menu with the specified operation menu. Then, the menu screen creation unit 40 controls the menu display unit 10 to display the created original menu on the second region.

For example, the menu screen creation unit 40 creates second tree-shaped menus in which the specified operation menu shown in Fig. 10(d) is arranged in the lower hierarchy of "O. main menu" to be displayed on the second region. Otherwise, the menu screen creation unit 40 creates a second tree-shaped menus in which the specified operation menu shown in Fig. 11 (b) and an operation menu positioned in the lower hierarchy in the first tree-shaped menus are arranged in the lower hierarchy of "O. main menu" to be displayed on the second region.

According to the embodiment, in addition to the effect described in the first embodiment, an effect that the user can simply create the original menu can be achieved.

In the related art, in a case of creating an original menu (shortcut menu, and the like) from operation menus, an additional function to a shortcut menu is likely to be present in the operation menu of each screen, it is necessary to firstly move the inside of the hierarchy to the operation menu that is intended to be added in the original menu and to register the operation menu. In this case, the disadvantage similar to the operation of searching for the aforementioned desired operation menu may occur. According to the embodiment, it is possible to solve the disadvantage when creating the original menu in the operation menu.

Note
According to the above description, a description of the following invention is made.

### [Invention 1]

An electronic device including:
a menu display unit that displays, on the display, a first region and a second region that is different from the first region, and displays, on the first region, tree-shaped menus in which a plurality of operation menus having a hierarchical structure, and indicating operation content respectively, are disposed in a tree shape,
a specific input receiving unit which receives an input to specify at least one of the operation menus from first tree-shaped menus, and
a menu screen creation unit which creates an original menu including the specified operation menu to display the original menu on the second region.

### [Invention 2]

In the electronic device according to invention 1, the menu screen creation unit creates, as the original menu, second tree-shaped menus including the specified operation menu and a plurality of operation menus positioned below the specified operation menu.

### [Invention 3]

The electronic device according to invention 1 or 2, including
a selection input receiving unit which receives an input to select one of the operation menus from the tree-shaped menus, and
a process executing unit which executes a process that are associated with the selected operation menu.

### [Invention 4]

A display method which is implemented by a electronic device comprising:
a menu display step that displays, on the display, a first region and a second region that is different from the first region, and displays, on the first region, tree-shaped menus in which a plurality of operation menus having a hierarchical structure, and indicating operation content respectively, are disposed in a tree shape,
a specific input receiving step which receives an input to specify at least one of the operation menus from first tree-shaped menus, and
a menu screen creation step which creates an original menu including the specified operation menu to display the original menu on the second region.

### [Invention 5]

A program which causes a computer to function as:
a menu display unit that displays, on the display, a first region and a second region that is different from the first region, and displays, on the first region, tree-shaped menus in which a plurality of operation menus having a hierarchical structure, and indicating operation content respectively, are disposed in a tree shape,
a specific input receiving unit which receives an input to specify at least one of the operation menus from first tree-shaped menus, and
a menu screen creation unit which creates an original menu including the specified operation menu to display the original menu on the second region.

This application claims a priority based on Japanese application No. 2011-031530 filed on February 17, 2011, and the entire disclosure is incorporated herein.

## Claims

1. An electronic device comprising:
a menu display unit that displays, on a display, tree-shaped menus in which a plurality of operation menus having a hierarchical structure, and indicating operation content respectively, are disposed in a tree shape, and is capable of enlargement and reduction of the tree-shaped menus.

2. The electronic device according to claim 1,
wherein when an input to select one of the operation menus from the tree-shaped menus is received, the electronic device performs a process that is associated with the selected operation menu.

3. The electronic device according to claim 1 or 2,
wherein in a case where a plurality of second operation menus are present immediately below first operation menus in the hierarchical structure, the menu display unit displays each of the plurality of second operation menus in the tree-shaped menus so as to be visually identified, and displays third operation menus positioned below each of the plurality of second operation menus in the hierarchical structure so as to be identified in the same manner as each of the second operation menus positioned in an upper level in the tree-shaped menus.

4. The electronic device according to claim 3,
wherein the menu display unit sets the operation menus that are designated by the user to the first operation menus, and displays the plurality of operation menus positioned below the first operation menu so as to be identified.

5. The electronic device according to any one of claims 1 to 4,
wherein in the tree-shaped menus, an uppermost hierarchy is configured of one operation menu, and
wherein the menu display unit rotates the tree-shaped menus displayed on the display with the operation menu of the uppermost hierarchy as a rotation center.

6. The electronic device according to any one of claims 1 to 4,
wherein the menu display unit rotates the tree-shaped menus displayed on the display with a predetermined position on the display that is designated by the user as a rotation center.

7. The electronic device according to any one of claims 1 to 6,
wherein the menu display unit displays on the display, a first region in which first tree-shaped menus are displayed and a second region that is different from the first region,
the electronic device further comprising:
a specific input receiving unit which receives an input to specify at least one of the operation menus from the first tree-shaped menus; and
a menu screen creation unit which creates original menus including the specified operation menu and displays the original menus on the second region.

8. The electronic device according to claim 7,
wherein the menu screen creation unit creates, as the original menus, the specified operation menus and second tree-shaped menus including the plurality of operation menus positioned below the specified operation menus.

9. A display method which is implemented by an electronic device,
wherein the electronic device displays, on a display, tree-shaped menus in which a plurality of operation menus having a hierarchical structure, and indicating operation content respectively, are disposed in a tree shape, and is capable of enlargement and reduction of the tree-shaped menus.

10. A program for performing a menu display on a display of an electronic device,
wherein the program causes a computer to function as a menu display unit that displays, on the display, tree-shaped menus in which a plurality of operation menus having a hierarchical structure, and indicating operation content respectively, are disposed in a tree shape, and is capable of enlargement and reduction of the tree-shaped menus.
